(19) Europäisches Patentamt
European Patent Office
Office européen des brevets

(11) **EP 1 654 867 B1**

(12) **EUROPÄISCHE PATENTSCHRIFT**

(45) Veröffentlichungstag und Bekanntmachung des Hinweises auf die Patenterteilung:
**05.12.2012 Patentblatt 2012/49**

(21) Anmeldenummer: 04703336.0

(22) Anmeldetag: **20.01.2004**

(51) Int Cl.:
*H04N 5/235* (2006.01)    *H04N 5/243* (2006.01)

(86) Internationale Anmeldenummer:
**PCT/DE2004/000067**

(87) Internationale Veröffentlichungsnummer:
**WO 2005/018225 (24.02.2005 Gazette 2005/08)**

(54) **VERFAHREN UND VORRICHTUNG ZUR BELICHTUNGSSTEUERUNG FÜR EINE KAMERA**

METHOD AND DEVICE FOR CONTROLLING THE EXPOSURE OF A CAMERA

PROCEDE ET DISPOSITIF POUR COMMANDER L'EXPOSITION DANS UNE CAMERA

(84) Benannte Vertragsstaaten:
**AT BE BG CH CY CZ DE DK EE ES FI FR GB GR HU IE IT LI LU MC NL PT RO SE SI SK TR**

(30) Priorität: **14.08.2003 DE 10337357**

(43) Veröffentlichungstag der Anmeldung:
**10.05.2006 Patentblatt 2006/19**

(73) Patentinhaber: **ADC Automotive Distance Control System GmbH**
**88131 Lindau (Bodensee) (DE)**

(72) Erfinder: **KRÖKEL, Dieter**
**88097 Eriskirch (DE)**

(74) Vertreter: **Pröll, Jürgen**
**Conti Temic microelectronic GmbH**
**Patent und Lizenzen**
**Sieboldstrasse 19**
**90411 Nürnberg (DE)**

(56) Entgegenhaltungen:
**EP-A- 1 074 430    EP-A- 1 311 114**

• **PATENT ABSTRACTS OF JAPAN Bd. 1997, Nr. 11, 28. November 1997 (1997-11-28) & JP 9 181962 A (TOYOTA MOTOR CORP), 11. Juli 1997 (1997-07-11)**

**Beschreibung**

Die vorliegende Erfindung betrifft ein Verfahren zur Belichtungssteuerung für eine Kamera, mit mindestens einem Bildsensor, bei dem ein Bildhelligkeits-Sollwert vorgegeben wird und auf diesen Bildhelligkeits-Sollwert geregelt wird. Die Erfindung betrifft ebenso eine Vorrichtung zur Belichtungssteuerung für eine Kamera, mit mindestens einem Bildsensor, bei dem ein Bildhelligkeits-Sollwert vorgegeben wird und auf diesen Bildhelligkeits-Sollwert geregelt wird. Die Erfindung betrifft auch eine Fahrzeugumfeldbeobachtungs-Kamera für Kraftfahrzeuge. Künftig werden voraussichtlich immer mehr Kraftfahrzeuge Systeme zur Beobachtung des näheren und weiteren Umfelds des Fahrzeugs aufweisen. Dies schließt Systeme ein, welche die Bewegung des Fahrzeugs als Ganzes und als bewegliches Objekt in einem Verkehrsstrom auf der Straße ermitteln.

Auf Grundlage dieser Systeme kann eine zielgerichtete Führung und Lenkung des Fahrzeugs zur Fahrerassistenz oder zur Navigation und eine Erweiterung von Insassenschutzsystemen bis hin zur Aufprallvermeidung realisiert werden. Solche Systeme bilden auch die Basis für semiautonomes oder sogar autonomes Fahren.

Als Systeme zur Fahrzeugumfeldbeobachtung sind neben den zur Abstands- und Folgeregelung bekannten Radarsystemen insbesondere Kamerasysteme (Fahrzeugumfeldbeobachtungs-Kamera) mit bildgebenden Sensoren (Bildsensoren) auf der Basis des sichtbaren Lichts oder im Infrarotbereich geeignet.

Bei der Aufnahme fortlaufender Bilder im Fahrzeug mit einer Kamera z.B. zur Spurfindung mit Hilfe einer Bildverarbeitung sind die Belichtungsverhältnisse nicht konstant. Sie ändern sich teilweise sehr schnell wie bei Tunneleinund /-Ausfahrten und umfassen einen weiten Dynamikbereich von hellem Sonnenschein bis zu Dunkelheit bei Nacht. Die Kamerasysteme müssen aber unter allen Bedingungen hinreichend sicher und genau arbeiten.

Dies erfordert einen sehr hohen Dynamikbereich des Systems. Dieser Dynamikbereich lässt sich mit heutzutage gängigen, preisgünstigen Kameras nicht mit einer Belichtungseinstellung abdecken. Üblicherweise werden hierzu die Blende und die Belichtungszeit angepasst.

Im Fahrzeug werden in der Regel Kameras mit LCD- oder CMOS-Sensoren verwendet. Der Belichtungszeit entspricht bei diesen Sensoren die Zeit, in der Licht gesammelt wird.

Diese Zeit wird im folgenden auch "Integrationszeit" genannt. Sie kann rein elektronisch gesteuert werden. Eine mechanische Blende ist gewöhnlich nicht vorhanden. Statt dessen wird zusätzlich bei LCD- und CMOS-Kamerasensoren die Verstärkung eingestellt, bevor das Signal für die weitere Verarbeitung einem Analog-/Digitalwandler zugeführt wird. Bisherige Regelverfahren, wie sie beispielsweise in der DE 102 15 525 oder US 2003/098914 beschrieben werden, messen kontinuierlich die Regelabweichung von einem Sollwert und versuchen diese Abweichung durch kontinuierliche Nachregelung möglichst klein zu halten. JP 09-181962 beschreibt ein Verfahren zur Helligkeitssteuerung, bei dem durch eine Testmessung und zweimaliges Auslesen bei unterschiedlicher Belichtungszeit Offset & Steigung einer Kennlinie zur Belichtungssteuerung bestimmt und für die nachfolgende eigentliche Messung verwendet werden.

Weiterhin wird ein Verfahren beschrieben, bei dem für ein sich bewegendes Fahrzeug ausgehend von einer Messung bei einer ersten Position auf die Beleuchtungssituation an einer zweiten Position abgeschätzt wird. Dabei wird im ersten Bild ein der zweiten Position annähernd entsprechender Punkt bestimmt und die Helligkeit dort anhand dreier definierter Kurven und somit dreier fest vorgegebener Steigungen bewertet.

Bei Auswertung der Bilder mit Hilfe von Bildverarbeitungssystemen ist es aber nicht immer vorteilhaft, jedes aufeinanderfolgende Bild in der Helligkeit zu regeln. Andererseits sollte, wenn geregelt werden muss, der Sollwert möglichst schnell und genau eingestellt werden.

Der Erfindung liegt die Aufgabe zugrunde, ein Verfahren und eine Vorrichtung zur Regelung der Belichtung des Sensors anzugeben, mit dem auch bei wechselnden Lichtverhältnissen eine möglichst hoher Bildkontrast rasch und sicher eingestellt werden kann.

Diese Aufgabe wird nach der Erfindung durch die Merkmale der unabhängigen Patentansprüche gelöst. Durch die Merkmale der davon abhängigen Unteransprüche sind vorteilhafte Weiterbildungen angegeben.

Nach der Erfindung wird die Aufgabe dadurch gelöst, dass die Regelung auf Grundlage einer Funktion der Bildhelligkeit H in Abhängigkeit von der Beleuchtung B erfolgt. Als Beleuchtung ist dabei die tatsächlich optisch vorhandene und am Bildsensor eingangsseitig eintreffende Helligkeit zu verstehen, aus der sich durch entsprechende Integration und/oder Verstärkung am Bildsensor ausgangsseitig die für die Auswertung zur Verfügung stehende Helligkeit ergibt.

Die Regelung der gemessenen Helligkeit erfolgt durch eine Einstellung der Steigung $\alpha$ in Abhängigkeit der Bildhelligkeit H von der Beleuchtung B (Kennlinie K). Eine neue Steigung wird dabei in einem Regelschritt ermittelt aus der ursprünglichen Steigung $\alpha1$, dem Bildhelligkeits-Sollwert Hsoll und der aktuellen Bildhelligkeit Hist nach folgender Formel: $\alpha2 = \alpha1 * Hsoll/Hist$

Durch die Anpassung der Steigung wird unmittelbar ein neuer Arbeitspunkt vorgegeben und kann so auf eine zeitaufwendige kontinuierliche Einregelung verzichtet werden.

Die Einstellung der Steigung $\alpha$ erfolgt durch eine entsprechende Vorgabe der Integrationszeit und/oder Verstärkung des Bildsensors.

Nach der Erfindung ist es vorzugsweise vorgesehen, dass als Bildhelligkeits-Sollwert Hsoll ein Bereich für den Sollwert Hsoll1, Hsoll2 vorgegeben wird. Der Abstand der Sollwerte voneinander definiert dabei den Arbeitsbereich und damit auch die Häufigkeit von Anpassungen. Es wird daher ein relativ zum maximalen, theoretischen Arbeitsbereich großer Bereich als aktiver Arbeitsbereich definiert, um relativ selten anpassen zu müssen. Insbesondere kann dadurch sichergestellt werden, dass nach erfolgter Anpassung in aller Regel in einem vorgegebenen Zeitfenster keine neue Anpassung erforderlich ist. Die konkreten Werte hängen aber stark von der Dynamik der zu erfassenden Bilder und der Helligkeitsschwankungen ab.

Vorzugsweise wird ein Bereich für den Sollwert von 50 bis 90% des Sollwertes für die untere Grenze Hsolll und von 110% bis 130 % des Sollwertes für die obere Grenze Hsoll2 vorgegeben.

Nach einer Weiterbildung der Erfindung ist es vorgesehen, dass bei der Ermittlung der neuen Steigung $\alpha2$ eine vorgegebene Charakteristik der Kennlinie K mit berücksichtig wird.

Erfindungsgemäß ist es vorgesehen, dass, wenn die Kennlinie K nicht durch den Ursprung U geht, die neue Steigung $\alpha2$ unter Berücksichtigung zumindest eines Offset-Werts Offs1, Offs2 ermittelt wird nach folgender Formel:

$$\alpha2 \; = \; \alpha1 \; * \; (\text{Hsoll} - \text{Offs2})/(\text{Hist} - \text{Off1})$$

Die zugrundeliegende Aufgabe wird auch durch eine Vorrichtung gelöst, bei der eine Bildauswertung mit einem Rechner erfolgt, mit welchem Rechner im wesentlichen auch die Belichtungssteuerung und Regelung bzw. Steuerung der Bildhelligkeit durchgeführt wird.

Vorzugsweise erfolgt die Einstellung der aktuellen Bildhelligkeit Hist auf die Sollbildhelligkeit Hsoll in einem Regelschritt. Es ist erfindungsgemäß vorgesehen, dass bestimmte, relevante Pixel zur Messung der Bildhelligkeit ausgewählt werden und im wesentlichen auf diese Bereiche die Bildhelligkeit geregelt wird.

Nach der Erfindung ist es vorgesehen, dass der Rechner dafür vorgesehen ist, über eine eingestellte Empfindlichkeit auf die aktuelle Bildhelligkeit der abgebildeten Szene zurückzurechnen und diesen Wert für das System oder andere Systeme zur Verfügung zu stellen.

Als Bildsensoren sind alle bekannten und denkbaren Sensoren für eine Bilderfassung geeignet, insbesondere Multisensorstrukturen aus lichtempfindlichen Elementen (Bildpunkten bzw. Pixeln), die in Zeilen- oder Matrixform angeordnet sind und ihr Licht aus der erfindungsgemäßen Optik erhalten. Es können auch Si-Bildsensoren (CCD Charge-Coupled Devices) verwendet werden. Bei den CCD-Bildsensoren werden durch das über eine transparente Elektrode einfallende Licht proportional zur Intensität und Belichtungszeit Ladungsträger erzeugt, die in einem "Potentialsumpf" (Si-SiO$_2$-Grenzschicht) gesammelt werden.

Mit weiteren Elektroden werden diese Ladungen in eine lichtundurchlässige Zone verschoben und in "analogen" Schieberegistern (Eimerkettenprinzip) zeilenweise in ein Ausgangsregister weitertransportiert, das mit hoher Taktrate seriell ausgelesen wird. Vorzugsweise werden aber auf CMOS-Technik beruhende Bildsensoren eingesetzt. Bei Verwendung von CMOS-Sensoren kann auch eine Blendensteuerung entfallen. Eine konstante Kontrastauflösung im gesamten Helligkeitsbereich wird ermöglicht. Diese Sensoren gestatten darüber hinaus vorteilhaft einen wahlfreien Zugriff auf die einzelnen Pixel bei gleichzeitig höherer Empfindlichkeit (höhere Ausleserate). Auch eine erste Vorverarbeitung der Signale auf dem Bildsensorchip ist möglich.

In einer besonders günstigen Ausführungsform der Erfindung werden an sich bekannte Formate für die Sensoren, vorzugsweise CMOS-Kamerasensoren, mit im wesentlichen einer VGA-Auflösung eingesetzt. Durch Verwendung der Standardformate sind die Kosten des Systems gering. Denn diese werden bereits in großen Stückzahlen gefertigt.

Die Erfindung ist aber ausdrücklich nicht auf die Verwendung dieser Standard-Sensoren beschränkt. Es ist beispielsweise vorgesehen, auch spezielle hochdynamische Sensoren beim optischen System nach der Erfindung zu verwenden. Insbesondere ist eine Anwendung von sogenannten TFA (Thin Film an ASIC)-Chips als Bildsensoren vorgesehen.

Durch Einsatz dieser Sensoren kann ein Dynamikumfang von insgesamt größer 200 dB erreicht werden. Diese Systeme können dann auch bei geringer Lichtstärke, insbesondere in der Dämmerung oder in der Nacht, z.B. als Nachtsichtgeräte, eingesetzt werden.

Das erfindungsgemäße Verfahren und die Vorrichtung werden vorzugsweise für eine Fahrzeugumfeldbeobachtungs-Kamera für Kraftfahrzeuge eingesetzt.

Die Erfindung wird in der nachfolgenden Beschreibung unter Bezugnahme auf die beiliegenden Abbildungen (Fig.1 bis Fig.4) näher erläutert.

Die Fig.1 zeigt schematisch ein Bildverarbeitungssystem, Die Fig.2 zeigt schematisch einen Verlauf der Bildhelligkeit H eines Sensors als Funktion der Beleuchtung B, Die Fig.3 zeigt schematisch ein Nachführen der aktuellen Bildhelligkeit Hist auf einen Bildhelligkeits-Sollwert (Sollbildhelligkeit) Hsoll.

Die Fig.4 zeigt schematisch ein dritte Auftragung eines Verlaufs der Bildhelligkeit (Kennlinie K), der nicht durch den Ursprung (Nullpunkt) geht.

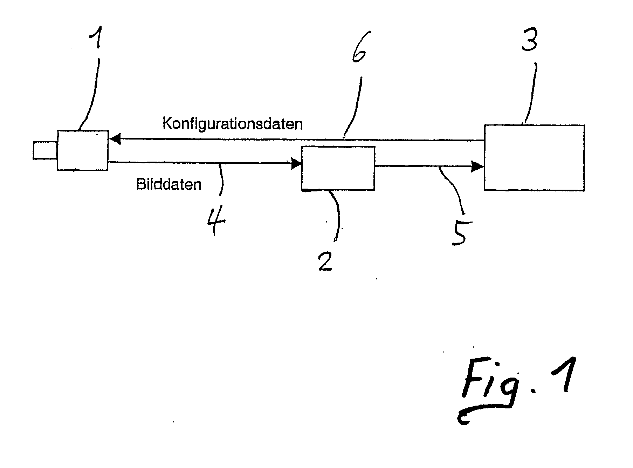

In der Fig.1 ist ein Bildverarbeitungssystem für eine Kamera zur Fahrzeugumfeldbeobachtung schematisch dargestellt. Das Bildverarbeitungssystem besteht aus dem Bildaufnehmer 1 (Kamera mit Sensor), Bilddatenaufnehmer 2 (Framegrabber) und Rechnereinheit 3. Der Bilddatenaufnehmer 2 nimmt Bilddaten 4 von der Kamera 1 auf. Als Ausgangsdaten werden die aufgenommene Bilddaten 5 dann zum Rechner 3 geführt, der dies auswertet. Der Rechner hat auch eine Verbindung 6 zur Kamera 1, über die er die Kamera 1 konfigurieren kann.

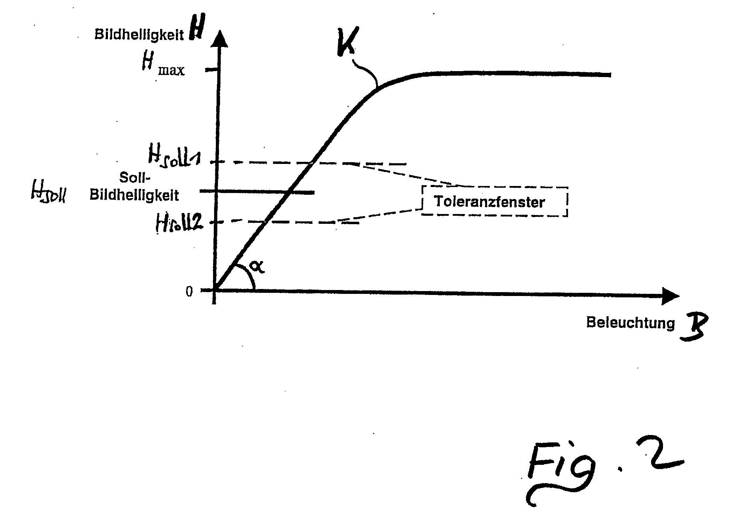

Die Fig.2 zeigt schematisch einen Verlauf der Bildhelligkeit H eines Sensors als Funktion der Beleuchtung B (Kennlinie K). Ausgangspunkt der Belichtungssteuerung ist die Tatsache, das die Sensoren unterhalb der Sättigungsschwelle (die im Idealfall bei der maximalen Bildhelligkeit Hmax liegt) ein im wesentlichen lineares Verhalten bezüglich der Beleuchtung, der Integrationszeit und der Verstärkung zeigen.

Die Steigung $\alpha$ des linearen Verlaufs wird durch die eingestellte Integrationszeit und der eingestellten Verstärkung festgelegt:

$$\alpha = \eta * \text{Integrationszeit} * \text{Verstärkung}$$

Die Proportionalitätskonstante $\eta$ beinhaltet die Lichtempfindlichkeit des Sensors.

Um eine mittlere Bildhelligkeit H einzustellen, wird ein Sollwert Hsoll vorgegeben, auf den geregelt wird. Die Übertragung neuer Regelwerte an den Sensor kann die Bilddatenübertragung beeinträchtigen. Der Regelvorgang soll daher so selten wie möglich vorgenommen werden. Deshalb wird zusätzlich ein Toleranzfenster zwischen Hsolll und Hsoll2 vorgegeben, in dem sich die Bildhelligkeit bewegen darf, bevor die Regelung eingreift.

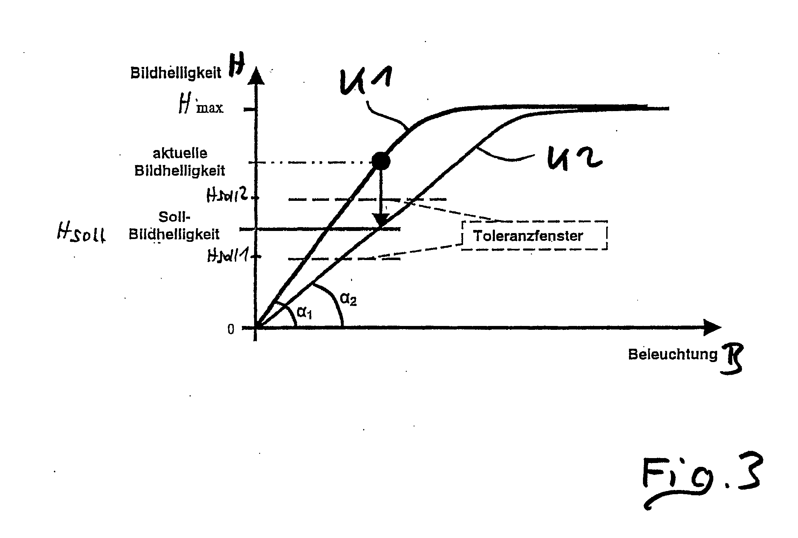

Die Fig.3 zeigt schematisch ein Nachführen der aktuellen Bildhelligkeit Hist auf einen Bildhelligkeits-Sollwert (Sollbildhelligkeit) Hsoll. Verlässt die aktuelle Bildhelligkeit Hist das Toleranzfenster zwischen Hsoll1 und Hsoll2, so wird die Steigung der Kennlinie K1 derart verändert, dass die aktuelle Bildhelligkeit Hist wieder der Sollbildhelligkeit Hsoll entspricht. Die neue Steigung beschreibt eine neue Kennlinie K2.

Das Wesen der Erfindung besteht darin, dass die neue Steigung $\alpha 1$ berechnet wird und damit das Nachführen der aktuellen Bildhelligkeit Hist auf die Sollbildheiligkeit Hsoll in einem Regelschritt erfolgt.

Wegen der linearen Abhängigkeit ergibt sich die neue Steigung $\alpha 2$ aus der alten Steigung $\alpha 1$, multipliziert mit dem Verhältnis der Sollbildhelligkeit Hsoll zur aktuellen Bildhelligkeit Hist: $\alpha 2 = \alpha 1 \cdot Hsoll / Hist$

Hat man das neue $\alpha 2$ ermittelt, wird wahlweise die Integrationszeit oder die Verstärkung oder auch beides angepasst, um die neue Kennlinie K2 möglichst genau einzustellen.

Nach dem Erkennen der Abweichung kann die neue Integrationszeit und/oder Verstärkung bei dem Sensor eingestellt werden und ist somit schon für das übernächste Bild aktiv. Bei einer typischen Bildwiederholfrequenz von 25Hz könnte somit bereits nach 40ms die neue Einstellung vorgenommen werden.

Bei der Ermittlung der neuen Steigung $\alpha 2$ wird also die vorgegebene Charakteristik einer Kennlinie K der Abhängigkeit der Bildhelligkeit H von der Beleuchtung B berücksichtigt, in dem in dem im wesentlicher linearen Bereich eine entsprechende Anpassung der Steigung erfolgt.

Zudem können aber auch die Grenzen des linearen Bereichs und Offsets berücksichtigt werden. Grundsätzlich könnte aber auch eine Berücksichtigung einer komplexeren Abhängigkeit durch eine entsprechend aufwendige Berechnung bspw. Durch ein Polynom höherer Ordnung erfolgen.

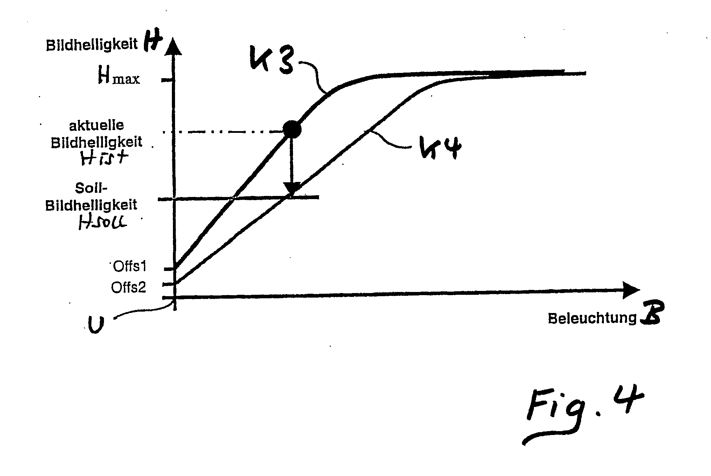

Die Fig.4 zeigt schematisch die Situation, wenn die Kennlinien K3,K4 nicht durch den Ursprung U gehen. Dann wird der Offset Offs1 bzw. Offs2 bei den entsprechenden Helligkeiten abgezogen.

Die Erfindung beschränkt sich nicht nur auf Sensoren mit linearer Kennlinie. Bei Sensoren mit nicht linearer Kennlinie (z.B. logarithmischer) lässt sich der untere Ast der Kennlinie hinreichend genau durch eine Gerade annähern. Damit lässt sich dieses Verfahren auch auf Sensoren mit nicht linearer Kennlinie übertragen und damit die Bildhelligkeit auch bei Sensoren mit nicht linearer Kennlinie hinreichend gut auf einen Sollwert einstellen. Typischerweise überdecken Sensoren mit nicht linearer Kennlinie einen wesentlich höheren Dynamikbereich als Sensoren mit linearer Kennlinie. Die Einstellung der Bildhelligkeit auf einen Sollwert ist bei Sensoren mit nicht linearer Kennlinie daher weniger kritisch als bei linearen Sensoren. Die erhöhte Ungenauigkeit bei der Berechnung der Regelparameter bei einer nicht linearen Kennlinie führt daher zu keiner nennenswerten Verschlechterung der Bildqualität.

Eine Kontrolle der Bildhelligkeit über den mit der Bildauswertung befassten Rechner bzw. Mikrocontroller oder Digitalem Signal Prozessor DSP, ist vorgesehen, so dass die aktuelle Bildhelligkeit auf die Sollbildhelligkeit in einem Regelschritt einzustellen ist.

Auch eine Auswahl der relevanten Pixel zur Messung der Bildhelligkeit ist vorgesehen. Bei einer Applikation wie z.B. Spurfindung füllt der für die Messung interessante Bereich nur einen Teil des Bildes aus. Die Belichtungssteuerung wird daher auf Pixel aus diesem Bereich beschränkt. So kann dieser Bereich optimal dargestellt werden.

Eine Übernahme der Funktion "Helligkeitssensor" ist ebenso vorteilhaft vorgesehen. Wenn der Rechner die Kontrolle über die absolute Einstellung von Verstärkung und Integrationszeit hat, kann er über die eingestellte Empfindlichkeit auf die aktuelle Helligkeit der abgebildeten Szene zurückrechnen und diesen Wert als Außenhelligkeit ausgeben.

Dieser Wert kann z.B. benutzt werden, um die Scheinwerfer des Fahrzeugs zu steuern.

**Patentansprüche**

1. Verfahren zur Belichtungssteuerung für eine Kamera, mit mindestens einem Bildsensor, bei dem ein Bildhelligkeits-Sollwert (Hsoll) vorgegeben wird und auf diesen Bildhelligkeits-Sollwert (Hsoll) geregelt wird,

   - wobei die Regelung durch eine Einstellung der Steigung ($\alpha$) der Kennlinie (K) der Abhängigkeit der Bildhelligkeit (H) von der Beleuchtung (B) durch eine Regelung der Integrationszeit und/oder Verstärkung des Bildsensors erfolgt **dadurch gekennzeichnet, dass**

   eine neue Steigung ermittelt wird aus der ursprünglichen Steigung $\alpha 1$, dem Bildhelligkeits-Sollwert Hsoll und der aktuellen Bildhelligkeit Hist nach folgender Formel:

$$\alpha 2 = \alpha 1 * Hsoll/Hist$$

2. Verfahren nach Anspruch 1, **dadurch gekennzeichnet, dass**

   a) die Bildhelligkeit Hist mit einem Toleranzbereich (Hsoll1, Hsoll2) um den Bildhelligkeits-Sollwert (Hsoll) verglichen wird und
   b) in einem Regelschritt eine neue Steigung $\alpha 2$ nur dann vorgegeben wird, wenn die Bildhelligkeit Hist außerhalb des Toleranzbereichs (Hsoll1, Hsoll2) um den Bildhelligkeits-Sollwert (Hsoll) liegt.

3. Verfahren nach Anspruch 1 oder 2, **dadurch gekennzeichnet, dass** bei der Ermittlung der neuen Steigung $\alpha 2$ eine vorgegebene Charakteristik einer Kennlinie (K) der Abhängigkeit der Bildhelligkeit (H) von der Beleuchtung (B) berücksichtigt wird.

4. Verfahren nach Anspruch 3, **dadurch gekennzeichnet, dass** die Kennlinie K nicht durch den Ursprung U geht und die neue Steigung $\alpha 2$ unter Berücksichtigung zumindest eines Offset-Werts Offs1 ermittelt wird nach folgender Formel:

$$\alpha 2 = \alpha 1 * (Hsoll - Offs1)/(Hist - Offs1)$$

5. Verfahren nach Anspruch 4, **dadurch gekennzeichnet, dass** für jede Steigung ($\alpha 2$, $\alpha 1$) ein zugehöriger Offset-Wert (Offs1, Offs2) hinterlegt und die neue Steigung $\alpha 2$ unter Berücksichtigung der zugehörigen Offset-Werte ermittelt wird nach folgender Formel:

$$\alpha 2 = \alpha 1 * (Hsoll - Offs2)/(Hist - Offs1)$$

6. Vorrichtung zur Belichtungssteuerung für eine Kamera, mit mindestens einem Bildsensor, bei dem ein Bildhelligkeits-Sollwert Hsoll vorgegeben wird und auf diesen Bildhelligkeits-Sollwert Hsoll geregelt wird, **dadurch gekennzeichnet, dass** ein Rechner vorgesehen ist, wobei der Rechner derart ausgestaltet ist dass eine Bildauswertung und zumindest im wesentlichen auch die Belichtungssteuerung und Regelung bzw. Steuerung der Bildhelligkeit nach einem Verfahren nach einem der vorherigen Ansprüche durchführbar ist.

7. Vorrichtung nach Anspruch 6, **dadurch gekennzeichnet, dass** bestimmte, relevante Pixel zur Messung der Bildhelligkeit ausgewählt werden und im wesentlichen auf diese Bereiche die Bildhelligkeit geregelt wird.

8. Vorrichtung nach einem der Ansprüche 6 oder 7, **dadurch gekennzeichnet, dass** der Rechner dafür vorgesehen ist, über eine eingestellte Empfindlichkeit auf die aktuelle Bildhelligkeit der abgebildeten Szene zurückzurechnen und diesen Wert für das System oder andere Systeme zur Verfügung zu stellen.

9. Verwendung eines Verfahrens und einer Vorrichtung nach einem der vorangegangenen Ansprüche für eine Fahrzeugumfeldbeobachtungs-Kamera für Kraftfahrzeuge.

**Claims**

1. Exposure control method for a camera with at least one image sensor in which an image brightness set-point (Hsoll) is preset and control is carried out with reference to this image brightness set-point (Hsoll), wherein control is carried out by adjusting the gradient ($\alpha$) of the characteristic (K) of the dependence of the image brightness (H) on the illumination (B) by controlling the integration time and/or amplification of the image sensor, **characterized in that** a new gradient is determined from the initial gradient $\alpha1$, the image brightness set-point Hsoll and the current image brightness Hist according to the following formula:

$$\alpha2 = \alpha1 * Hsoll / Hist$$

2. Method according to claim 1, **characterized in that**

   a) the image brightness Hist is compared with a tolerance range (Hsoll1, Hsoll2) around the image brightness set-point (Hsoll); and
   b) a new gradient $\alpha2$ is preset in a control step only if the image brightness Hist lies outside said tolerance range (Hsoll1, Hsoll2) around the image brightness set-point (Hsoll).

3. Method according to claim 1 or 2, **characterized in that** a preset characteristic of a characteristic (K) of the dependence of the image brightness (H) on the illumination (B) is taken into consideration when determining the new gradient $\alpha2$.

4. Method according to claim 3, **characterized in that** the characteristic K does not run through the origin U and the new gradient $\alpha2$ is determined considering at least one offset value Offs1 according to the following formula:

$$\alpha2 = \alpha1 * (Hsoll - Offs1) / (Hist - Offs1)$$

5. Method according to claim 4, **characterized in that** for each gradient ($\alpha2$, $\alpha1$) an associated offset value (Offs1, Offs2) is stored and the new gradient $\alpha2$ is determined considering the associated offset values according to the following formula:

$$\alpha2 = \alpha1 * (Hsoll - Offs2) / (Hist - Offs1)$$

6. Exposure control device for a camera with at least one image sensor in which an image brightness set-point Hsoll is preset and control is carried out with reference to this image brightness set-point Hsoll, **characterized in that** a computer is provided, wherein the computer is designed in such a manner that it is possible to carry out an image evaluation and at least essentially also the exposure control and the closed-loop or open-loop control of the image brightness according to a method according to any one of the preceding claims.

7. Device according to claim 6, **characterized in that** specific, relevant pixels are selected for the purpose of measuring the image brightness and the image brightness is essentially controlled with reference to these regions.

8. Device according to any one of claims 6 or 7, **characterized in that** the computer is provided for computing back to the current image brightness of the imaged scene using an adjusted sensitivity and for providing this value for the system or for other systems.

9. Use of a method and of a device according to any one of the preceding claims for a vehicle surroundings observation camera for motor vehicles.

**Revendications**

1. Procédé de commande d'éclairage pour une caméra, avec au moins un capteur d'image, dans lequel une valeur de consigne de luminosité d'image (Hsoll) est prédéfinie et un réglage est effectué sur cette valeur de consigne de luminosité d'image (Hsoll),

   - le réglage étant effectué par un ajustement du gradient ($\alpha$) de la courbe caractéristique (L) de la dépendance de la luminosité d'image (H) vis-à-vis de l'éclairage (B) par un réglage du temps d'intégration et/ou de l'amplification du capteur d'image,
   **caractérisé en ce**
   **qu'**un nouveau gradient est déterminé à partir du gradient initial $\alpha1$, de la valeur de consigne de luminosité d'image Hsoll et de la luminosité d'image Hist actuelle selon la formule suivante :

$$\alpha2 = \alpha1 * Hsoll/Hist$$

2. Procédé selon la revendication 1, **caractérisé en ce que**

   a) la luminosité d'image Hist est comparée à une plage de tolérance (Hsoll1, Hsoll2) autour de la valeur de consigne de luminosité d'image (Hsoll) et,
   b) dans une étape de réglage, un nouveau gradient $\alpha2$ ne peut être prédéfini que si la luminosité d'image Hist est en-dehors de la plage de tolérance (Hsoll1, Hsoll2) autour de la valeur de consigne de luminosité d'image (Hsoll).

3. Procédé selon la revendication 1 ou 2, **caractérisé en ce que**, lors de la détermination du nouveau gradient $\alpha2$, une caractéristique prédéfinie d'une courbe caractéristique (K) de la dépendance de la luminosité d'image (H) vis-à-vis de l'éclairage (B) est prise en considération.

4. Procédé selon la revendication 3, **caractérisé en ce que** la courbe caractéristique K ne passe pas par l'origine U, et **en ce que** le nouveau gradient $\alpha2$ est déterminé, en prenant en compte au moins une valeur d'offset Offs1, selon la formule suivante :

$$\alpha2 = \alpha1 * (Hsoll - Offs1) / (Hist - Offs1)$$

5. Procédé selon la revendication 4, **caractérisé en ce que**, pour chaque gradient ($\alpha2$, $\alpha1$), une valeur d'offset (Offs1, Offs2) correspondante est archivée et le nouveau gradient $\alpha2$ est déterminé en prenant en compte les valeurs d'offset correspondantes, selon la formule suivante :

$$\alpha2 = \alpha1 * (Hsoll - Offs2) / (Hist - Offs1)$$

6. Dispositif de commande d'éclairage pour une caméra, avec au moins un capteur d'image, dans lequel une valeur de consigne de luminosité d'image Hsoll est prédéfinie et un réglage est effectué sur cette valeur de consigne de luminosité d'image Hsoll,
   **caractérisé en ce qu'**il est prévu un calculateur, le calculateur étant constitué de sorte qu'une analyse d'image et au moins essentiellement également la commande de l'éclairage et la régulation ou respectivement la commande de la luminosité d'image peuvent être effectuées selon un procédé selon une des revendications précédentes.

7. Dispositif selon la revendication 6, **caractérisé en ce que** certains pixels représentatifs sont sélectionnés pour la mesure de la luminosité d'image, et **en ce que** la luminosité d'image est réglée essentiellement sur ces plages.

8. Dispositif selon une des revendications 6 ou 7, **caractérisé en ce que** le calculateur est prévu pour recalculer une valeur, par le biais d'une sensibilité réglée à la luminosité d'image actuelle de la scène reproduite, et pour mettre cette valeur à la disposition du système ou d'autres systèmes.

9. Utilisation d'un procédé et d'un dispositif selon l'une des revendications précédentes pour une caméra pour véhicules chargée de l'observation de la zone entourant un véhicule.

Konfigurationsdaten

Bilddaten

Fig. 1

EP 1 654 867 B1

Fig. 2

Bildhelligkeit **H**

$H$ max —

aktuelle
Bildhelligkeit

$H_{soll2}$ —

$H_{soll}$  Soll-
Bildhelligkeit

$H_{soll1}$ —

**U1**

**U2**

Toleranzfenster

$\alpha_1$  $\alpha_2$

0

Beleuchtung **B**

**Fig. 3**

Fig. 4

EP 1 654 867 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10215525
- US 2003098914 A
- JP 9181962 A